# EUROPÄISCHE PATENTSCHRIFT

(11) **EP 3 714 235 B1**
(45) Veröffentlichungstag und Bekanntmachung des Hinweises auf die Patenterteilung: **01.12.2021**
(21) Anmeldenummer: 18795356.7
(22) Anmeldetag: 22.10.2018
(51) Int. Cl.: G01F 1/84, G01F 1/82

(54) **MESSGERÄT ZUM MESSEN EINES MASSENDURCHSATZES EINES MATERIALSTROMS, VERFAHREN UND MESSSYSTEM**
MEASURING DEVICE FOR MEASURING A MASS FLOW RATE OF A MATERIAL FLOW, METHOD AND MEASURING SYSTEM
DISPOSITIF DE MESURE PERMETTANT DE MESURER UN DÉBIT DE MASSE D'UN FLUX DE MATIÈRE, PROCÉDÉ ET SYSTÈME DE MESURE

(30) Priorität: 23.11.2017 DE 102017010850
(43) Veröffentlichungstag der Anmeldung: 30.09.2020
(73) Patentinhaber: Schenck Process Europe GmbH, 64293 Darmstadt (DE)
(72) Erfinder: KAHLE, Jens, 63303 Dreieich Hessen (DE)
(86) Internationale Anmeldenummer: PCT/EP2018/078825
(87) Internationale Veröffentlichungsnummer: WO 2019/101451

(56) Entgegenhaltungen:
- EP-A1- 0 432 627
- EP-A1- 1 619 481
- DE-A1-102005 018 917
- DE-B3- 10 253 078

## Beschreibung

Die Erfindung betrifft ein Messgerät zum Messen eines Massendurchsatzes eines Materialstroms gemäß dem Oberbegriff des Anspruchs 1 sowie ein Verfahren zum Betreiben eines solchen Messgeräts. Außerdem betrifft die Erfindung ein Messsystem mit einem solchen Messgerät sowie ein Verfahren zum Betreiben eines derartigen Messsystems. Darüber hinaus betrifft die Erfindung ein Dosiersystem mit einem solchen Messgerät.

Zur Ermittlung eines Massendurchsatzes eines Materialstroms, wie zum Beispiel eines Schüttgutstroms, werden in der Praxis unter anderem Förderbandwaagen, Messschurren oder Prallplatten eingesetzt.

Insbesondere zur hochgenauen Messung des Massendurchsatzes eines Materialstroms werden vorzugsweise Messgeräte eingesetzt, die nach dem Coriolis-Prinzip arbeiten. Zur Bestimmung des Massendurchsatzes eines Materialstroms nutzen diese Messgeräte die Coriolis-Kraft, die auftritt, wenn der Materialstrom mithilfe eines beschaufelten Messrads, welches mit konstanter Winkelgeschwindigkeit rotiert, radial nach außen beschleunigt wird. Die Coriolis-Kraft hat ein Bremsmoment auf das Messrad zur Folge, welches proportional zu dem Massendurchsatz ist. Ein Messgerät zum Messen eines Massendurchsatzes eines Materialstroms nach dem Coriolis-Prinzip gemäß dem Oberbegriff des Anspruchs 1 ist beispielsweise aus der DE 102 53 078 B3 bekannt. Dieses Messgerät umfasst ein beschaufeltes Messrad zum Umlenken des Materialstroms, eine starr mit dem Messrad verbundene Abtriebswelle, eine Antriebswelle zum Antreiben des Messrads, eine die Abtriebswelle umgebende Lagerhülse, eine Kraftmesseinrichtung sowie ein Getriebe, welches ein starr mit der Antriebswelle verbundenes erstes Getriebeelement, ein starr mit der Abtriebswelle verbundenes zweites Getriebeelement sowie ein Zwischenelement zum Übertragen eines Drehmoments vom ersten Getriebeelement auf das zweite Getriebeelement aufweist. Das erste und zweite Getriebeelement sowie das Zwischenelement sind jeweils als Stirnrad ausgebildet. Die nach dem Coriolis-Prinzip im Messbetrieb auf die Abtriebswelle wirkende Reaktionskraft wird über das zweite Getriebeelement auf das Zwischenelement übertragen. Mithilfe eines drehbar im Gehäuse des Messgeräts gelagerten Kraftübertragungsarms, auf dem das Zwischenelement gelagert ist, wird die auf das Zwischenelement wirkende Kraft auf die Kraftmesseinrichtung übertragen. Darüber hinaus umfasst dieses Messgerät ein zusätzliches Getriebe mit weiteren Stirnrädern, von denen eines starr mit der Lagerhülse verbunden ist. Zur Minimierung von reibungsbedingten Störkräften wird die Lagerhülse mithilfe des zusätzlichen Getriebes mit einer Drehzahl angetrieben, die der Drehzahl der Abtriebswelle entspricht.

Ein Nachteil des Messgeräts aus der DE 102 53 078 B3 ist, dass dieses Messgerät konstruktiv sehr komplex ist, sodass dessen Herstellung mit einem hohen Kosten- und Arbeitsaufwand verbunden ist.

Eine Aufgabe der Erfindung ist es, bei einem Messgerät der im Oberbegriff des Anspruchs 1 genannten Art einen konstruktiv einfachen Aufbau zu ermöglichen.

Diese Aufgabe wird erfindungsgemäß gelöst durch ein Messgerät nach Anspruch 1.

Ferner ist es eine Aufgabe der Erfindung, ein Verfahren zum Betreiben eines solchen Messgeräts anzugeben.

Diese Aufgabe wird erfindungsgemäß gelöst durch ein Verfahren nach Anspruch 14.

Weitere Aufgaben der Erfindung sind, ein Messsystem mit einem solchen Messgerät bereitzustellen, ein Verfahren zum Betreiben eines derartigen Messsystems anzugeben sowie ein Dosiersystem mit einem solchen Messgerät bereitzustellen.

Diese Aufgaben werden erfindungsgemäß gelöst durch ein Messsystem nach Anspruch 15, ein Verfahren nach Anspruch 16 bzw. ein Dosiersystem nach Anspruch 18.

Vorteilhafte Weiterbildungen der Erfindung sind in den weiteren Patentansprüchen sowie in der nachfolgenden Beschreibung angegeben.

Das erfindungsgemäße Messgerät zum Messen eines Massendurchsatzes eines Materialstroms, insbesondere eines Schüttgutstroms, nach dem Coriolis-Prinzip umfasst ein rotierbar gelagertes, beschaufeltes Messrad zum Umlenken des Materialstroms, eine Antriebswelle zum Antreiben des Messrads, eine starr mit dem Messrad verbundene Abtriebswelle, eine zumindest einen Teil der Abtriebswelle umgebende Lagerhülse zur drehbaren Lagerung der Abtriebswelle, eine Kraftmesseinrichtung und ein Getriebe, das ein starr mit der Antriebswelle verbundenes erstes Getriebeelement, ein starr mit der Abtriebswelle verbundenes zweites Getriebeelement sowie ein Zwischenelement zum Übertragen eines Drehmoments vom ersten Getriebeelement auf das zweite Getriebeelement aufweist. Außerdem umfasst das erfindungsgemäße Messgerät eine starr mit der Lagerhülse verbundene Schwinge, an der das Zwischenelement des Getriebes gelagert ist, wobei die Kraftmesseinrichtung mit der Schwinge verbunden ist, sodass mittels der Kraftmesseinrichtung eine auf die Schwinge übertragene Kraft messbar ist.

Bei dem erfindungsgemäßen Messgerät kann darauf verzichtet werden, die Lagerhülse anzutreiben, um Reibungskräfte zwischen der Lagerhülse und der Abtriebswelle zu vermeiden. Daher ist ein zusätzliches Getriebe zum Antreiben der Lagerhülse entbehrlich. Dies ermöglicht einen konstruktiv einfachen und kompakten Aufbau des Messgeräts.

Die Wortbestandteile "Antrieb" und "Abtrieb" bei den Begriffen "Antriebswelle" und "Abtriebswelle" dienen zur Unterscheidung der beiden Wellen. Für das Messrad stellt die Abtriebswelle ein Antriebselement dar, weil das Messrad über die Abtriebswelle antreibbar ist. Die Abtriebswelle ist ihrerseits (unter Zwischenschaltung des Getriebes) über die Antriebswelle antreibbar.

Die starr mit der Lagerhülse verbundene Schwinge kann beispielsweise topfförmig ausgebildet, wobei grundsätzlich außer einer topfförmigen Ausgestaltung andere Ausgestaltungen der Lagerhülse möglich sind.

In bevorzugter Weise sind das erste Getriebeelement, das zweite Getriebeelement und das Zwischenelement jeweils als Zahnrad, insbesondere als Stirnrad, ausgebildet. Weiter ist es bevorzugt, wenn das Zwischenelement mit dem ersten und dem zweiten Getriebeelement in Eingriff steht.

Das jeweilige Getriebeelement kann als außen- oder innenverzahntes Zahnrad ausgebildet sein. Ferner kann das Zwischenelement als außen- oder innenverzahntes Zahnrad ausgebildet sein.

Wenn das erste Getriebeelement und das Zwischenelement jeweils als außenverzahntes Zahnrad ausgebildet sind und das zweite Getriebeelement als innenverzahntes Zahnrad ausgebildet ist, ist es möglich, das Messgerät besonders kompakt auszugestalten.

Vorteilhafterweise umfasst das Messgerät mindestens ein zwischen der Abtriebswelle und der Lagerhülse angeordnetes Lager, mittels welchem die Abtriebswelle in der Lagerhülse drehbar gelagert ist. Dieses Lager ist zweckmäßigerweise als Radiallager, insbesondere als radiales Wälzlager, ausgebildet.

Des Weiteren ist es vorteilhaft, wenn das Messgerät mindestens ein Lager zur drehbaren Lagerung der Lagerhülse aufweist. Zweckmäßigerweise ist dieses Lager als Radiallager, insbesondere als radiales Wälzlager, ausgebildet.

In bevorzugter Weise wird die Schwinge von der Kraftmesseinrichtung festgehalten. Dies ist nicht notwendigerweise so zu verstehen, dass die Kraftmesseinrichtung gar keine Rotation der Schwinge zulässt. Vielmehr kann die Formulierung, dass die Schwinge von der Kraftmesseinrichtung festgehalten wird, so verstanden werden, dass die Drehbarkeit der Schwinge durch die Kraftmesseinrichtung eingeschränkt wird.

Wenn die Schwinge von der Kraftmesseinrichtung festgehalten wird, können die Schwinge und die starr mit der Schwinge verbundene Lagerhülse vorzugsweise nur in so geringem Maße rotieren, wie es eine elastische Verformung der Kraftmesseinrichtung, welche unter einer Krafteinwirkung auf die Kraftmesseinrichtung auftritt, zulässt. Eine solche Rotation kann beispielsweise eine Rotation mit einem maximalen Drehwinkel von +/- 0,5° sein.

Weiter ist es vorteilhaft, wenn das Messgerät mindestens ein Dichtelement aufweist, welches einen Spalt zwischen der Lagerhülse und der Abtriebswelle abdichtet. Dieses Dichtelement kann dazu dienen, das Getriebe des Messgeräts und/oder dessen Lager vor Verunreinigungspartikeln, insbesondere Schüttgutpartikeln, zu schützen. Zweckmäßigerweise ist dieses Dichtelement zwischen der Lagerhülse und der Abtriebswelle angeordnet.

Vorzugsweise umfasst das Messgerät ein starr mit der Schwinge verbundenes Achselement, mittels welchem das Zwischenelement des Getriebes an der Schwinge abgestützt ist. Weiter ist es vorteilhaft, wenn das Messgerät mit einem zwischen dem Achselement und dem Zwischenelement angeordneten Lager ausgestattet ist, mittels welchem das Zwischenelement um das Achselement drehbar gelagert ist. Bei diesem Lager handelt es sich vorzugsweise um ein Radiallager, insbesondere um ein radiales Wälzlager.

Des Weiteren ist es bevorzugt, wenn das zweite Getriebeelement einen Wirkdurchmesser aufweist , der das Vierfache oder im Wesentlich das Vierfache des Abstands der Rotationsachse des Zwischenelements zu der Rotationsachse der Abtriebswelle beträgt. Dadurch kann erreicht werden, dass die Kraft, die im Messbetrieb des Messgeräts auf die Kraftmesseinrichtung wirkt, nur durch die nach dem Coriolis-Prinzip (aufgrund einer Umlenkung des Materialstroms) auf das Messrad wirkende Bremskraft bestimmt ist und unabhängig von etwaigen reibungsbedingen Störkräften ist. Insbesondere kann durch das besagte geometrische Verhältnis erreicht werden, dass die im Messbetrieb auf die Kraftmesseinrichtung wirkende Kraft unabhängig ist von reibungsbedingten Störkräften, die auf Reibung zwischen der Abtriebswelle und gegebenenfalls zwischen der Abtriebswelle und der Lagerhülse angeordneten Lagern und/oder Dichtelementen zurückzuführen sind.

Zweckmäßigerweise umfasst das Messgerät ein Gehäuse. In dem Gehäuse können insbesondere die Schwinge, das Getriebe und die Lagerhülse angeordnet sein. Die Lagerhülse kann vollständig oder nur teilweise innerhalb des Gehäuses angeordnet sein. Darüber hinaus können in dem Gehäuse ein oder mehrere andere Elemente des Messgeräts angeordnet sein. Das zuvor erwähnte Lager zur drehbaren Lagerung der Lagerhülse ist zweckmäßigerweise zwischen einer die Lagerhülse umgebenden Wandung des Gehäuses und der Lagerhülse angeordnet.

Das Gehäuse weist vorzugsweise eine Öffnung auf, durch welche die Abtriebswelle hindurchgeführt ist. Durch diese Öffnung kann ein Innenraum des Gehäuses mit der Umgebung des Gehäuses verbunden sein.

Weiter ist es bevorzugt, wenn das Messgerät mit einer Sperrgaseinrichtung zum Einleiten von Sperrgas in das Gehäuse ausgestattet ist. Zweckmäßigerweise wird mithilfe der Sperrgaseinrichtung ein Sperrgas mit einem erhöhten Druck, beispielsweise mit einem Druck von 2 bar, in das Gehäuse eingeleitet. Das in das Gehäuse eingeleitete Sperrgas dient vorzugsweise dazu, zu verhindern, dass Verunreinigungspartikel, insbesondere Schüttgutpartikel, über besagte Öffnung in das Gehäuse eindringen.

Bei einer vorteilhaften Erfindungsvariante umfasst die Vorrichtung einen Schwebering zum Abdichten besagter Öffnung des Gehäuses. Der Schwebering kann insbesondere dazu dienen, besagte Öffnung im Falle einer Unterbrechung bzw. eines Ausfalls der Sperrgaszufuhr abzudichten.

Bei einer vorteilhaften Weiterbildung weist die Schwinge einen zylindrischen Fortsatz auf. In bevorzugter Weise ist der Fortsatz koaxial zur Abtriebswelle angeordnet.

Darüber hinaus kann das Messgerät mindestens ein Radiallager zur drehbaren Lagerung der Schwinge im Gehäuse aufweisen, welches zwischen einer Wandung des Gehäuses und dem zylindrischen Fortsatz der Schwinge angeordnet ist. Weiter ist es vorteilhaft, wenn das Messgerät ein Axiallager aufweist, auf welchem der zylindrische Fortsatz der Schwinge abgestützt ist. Das Axiallager kann beispielsweise als Kugel ausgebildet sein.

Bei einer bevorzugten Ausführungsform weist das Messgerät ein Kreuzfederelement mit mehreren sich kreuzende Federn auf. Vorteilhafterweise umfasst das Messgerät ferner ein Abstützelement zur punktuellen Abstützung der Schwinge. In bevorzugter Weise ist die Schwinge mithilfe des Kreuzfederelements und des Abstützelements im Gehäuse gelagert.

Das zuvor erwähnte Kreuzfederelement kann insbesondere wie das in DE 103 30 947 B4 beschriebene Kreuzfederelement ausgebildet sein. Bei den Federn des Kreuzfederelements kann es sich insbesondere um Blattfedern handeln. Zweckmäßigerweise bilden jeweils zwei Federn des Kreuzfederelements ein Federpaar aus zwei sich kreuzenden Federn. Vorteilhafterweise kreuzen sich die Federn des Kreuzfederelements an der Rotationsachse der Abtriebswelle, insbesondere in einem rechten Winkel.

Die Erfindung betrifft ferner ein Verfahren zum Betreiben eines Messgeräts der erfindungsgemäßen Art. Bei diesem erfindungsgemäßen Verfahren wird das Messrad mittels einer mit der Antriebswelle verbundenen Antriebseinheit angetrieben und das Messrad von einem Materialstrom, insbesondere einem Schüttgutstrom, beaufschlagt, wobei der Materialstrom vom Messrad umgelenkt wird, auf das Messrad eine Reaktionskraft wirkt, die über das Zwischenelement des Getriebes auf die Schwinge übertragen wird, und von der Kraftmesseinrichtung ein von der Reaktionskraft abhängiges Messsignal erzeugt wird, anhand dessen ein Massendurchsatz des Materialstroms ermittelbar ist.

Wie eingangs erwähnt, betrifft die Erfindung außerdem ein Messsystem. Das erfindungsgemäße Messsystem umfasst ein Messgerät der erfindungsgemäßen Art sowie eine Auswerteeinheit, welche dazu eingerichtet ist, unter Verwendung eines Messsignals der Kraftmesseinrichtung des Messgeräts einen Massendurchsatz eines das Messrad des Messgeräts beaufschlagenden Materialstroms zu ermitteln.

Zweckmäßigerweise ist die Auswerteeinheit des Messsystems mit einem Datenspeicher zum Speichern von Software sowie mit einem Prozessor zum Ausführen von Software ausgestattet. Im Datenspeicher der Auswerteeinheit ist vorzugsweise eine Software hinterlegt, die vom Prozessor der Auswerteeinheit ausführbar ist. Vorteilhafterweise befähigt diese Software die Auswerteeinheit dazu, unter Verwendung des Messsignals der Kraftmesseinrichtung den Massendurchsatz des Materialstroms zu ermitteln.

Die Erfindung betrifft weiterhin ein Verfahren zum Betreiben eines Messsystems der erfindungsgemäßen Art. Bei diesem erfindungsgemäßen Verfahren wird das Messrad mittels einer mit der Antriebswelle verbundenen Antriebseinheit angetrieben und das Messrad von einem Materialstrom, insbesondere einem Schüttgutstrom, beaufschlagt, wobei der Materialstrom vom Messrad umgelenkt wird, auf das Messrad eine Reaktionskraft wirkt, die über das Zwischenelement des Getriebes auf die Schwinge übertragen wird, und von der Kraftmesseinrichtung ein von der Reaktionskraft abhängiges Messsignal erzeugt wird, und wobei von der Auswerteeinheit des Messsystems anhand des Messsignals ein Massendurchsatz des Materialstroms ermittelt wird.

Vorteilhafterweise wird eine Drehzahl des Messrads gemessen. Der Massendurchsatz des Materialstroms wird von der Auswerteeinheit vorzugsweise unter Verwendung der gemessenen Drehzahl des Messrads ermittelt.

Darüber hinaus betrifft die Erfindung, wie eingangs erwähnt, ein Dosiersystem. Das erfindungsgemäße Dosiersystem umfasst ein erfindungsgemäßes Messgerät, eine Zufördereinheit zum Einleiten des Materialstroms in das Messgerät sowie eine Auswerteeinheit, die dazu eingerichtet ist, unter Verwendung eines Messsignals der Kraftmesseinrichtung des Messgeräts durch Steuern oder Regeln einer Stellgröße der Zufördereinheit einen definierten Massendurchsatz des Materialstroms einzustellen. Stellgrößen können hierbei beispielsweise die Drehzahl eines Förderelements, Förderschnecke, Zellenrads oder Förderbands, die Frequenz und/oder Schwingstärke einer Austragsrinne oder der Öffnungswinkel eines Drehschiebers einer Zufördereinheit sein.

Die Auswerteeinheit des Dosiersystems ist zweckmäßigerweise mit einem Datenspeicher zum Speichern von Software sowie mit einem Prozessor zum Ausführen von Software ausgestattet. Vorteilhafterweise befähigt eine Software, die im Datenspeicher der Auswerteeinheit des Dosiersystems hinterlegt ist und vom Prozessor der Auswerteeinheit ausführbar ist, die Auswerteeinheit dazu, unter Verwendung des Messsignals der Kraftmesseinrichtung durch Steuern oder Regeln der Stellgröße der Zufördereinheit einen definierten Massendurchsatz des Materialstroms einzustellen.

Im Weiteren wird die Erfindung anhand von Figuren näher erläutert. Soweit zweckdienlich, sind hierbei gleiche oder gleichwirkende Elemente mit gleichen Bezugszeichen versehen. Die Erfindung ist nicht auf die in den Figuren dargestellten Ausführungen beschränkt - auch nicht in Bezug auf funktionale Merkmale. Die bisherige Beschreibung und die nachfolgende Figurenbeschreibung enthalten zahlreiche Merkmale, die in den abhängigen Patentansprüchen teilweise zu mehreren zusammengefasst wiedergegeben sind. Diese Merkmale wird der Fachmann jedoch auch einzeln betrachten und zu sinnvollen weiteren Kombinationen zusammenfügen. Insbesondere sind diese Merkmale jeweils einzeln und in beliebiger geeigneter Kombination mit dem erfindungsgemäßen Messgerät, dem erfindungsgemäßen Messsystem, dem erfindungsgemäßen Dosiersystem und/oder den erfindungsgemäßen Verfahren kombinierbar.

Es zeigen:
- Figur 1: ein Dosiersystem mit einer Zufördereinheit, einem Messgerät, einer Auswerteeinheit, einem Kompressor und einer Antriebseinheit in einer schematischen Darstellung;
- Figur 2: eine schematische Längsschnittdarstellung des Messgeräts des Dosiersystems aus Figur 1;
- Figur 3: eine schematische Querschnittdarstellung des Messgeräts aus Figur 2;
- Figur 4: eine schematische Längsschnittdarstellung einer anderen Ausführungsvariante eines Messgeräts für ein Dosiersystem;
- Figur 5: eine schematische Querschnittdarstellung des Messgeräts aus Figur 4;
- Figur 6: eine schematische Längsschnittdarstellung einer weiteren Ausführungsvariante eines Messgeräts für ein Dosiersystem.

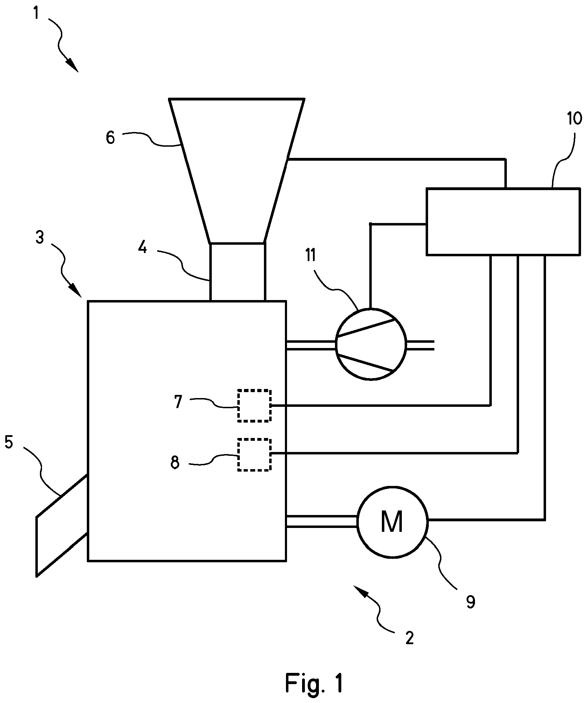

Figur 1 zeigt ein Dosiersystem 1 in einer schematischen Darstellung.

Das Dosiersystem 1 umfasst ein Messsystem 2 mit einem Messgerät 3 zum Messen eines Massendurchsatzes eines Materialstroms nach dem Coriolis-Prinzip. Bei dem Materialstrom kann es sich insbesondere um einen Schüttgutstrom handeln. Mithilfe des Messgeräts 3 kann also insbesondere der Massendurchsatz eines Materialstroms aus rieselfähigen Schüttgutpartikeln, wie zum Beispiel Kohlenstaub, gemessen werden.

Das Messgerät 3 umfasst unter anderem einen Einlass 4 und einen Auslass 5. Der Einlass 4 des Messgeräts 3 ist an eine Zufördereinheit 6 des Dosiersystems 1 angeschlossen. Darüber hinaus ist das Messgerät 3 mit einer Kraftmesseinrichtung 7, beispielsweise einem Doppelbiegebalken-Aufnehmer, und einer Drehzahlmesseinrichtung 8 ausgestattet.

Weiterhin umfasst das Dosiersystem 1 eine Antriebseinheit 9 zum Antreiben des Messgeräts 3. Die Antriebseinheit 9 kann beispielsweise als Elektromotor ausgebildet sein.

Zusätzlich zu dem Messgerät 3 umfasst das Messsystem 2 eine Auswerteeinheit 10, die mit der Antriebseinheit 9, der Kraftmesseinrichtung 7 und der Drehzahlmesseinrichtung 8 verbunden ist.

Die Auswerteeinheit 10 ist mithilfe einer in der Auswerteeinheit 10 hinterlegten Software dazu eingerichtet, Messsignale von der Kraftmesseinrichtung 7 und der Drehzahlmesseinrichtung 8 zu verarbeiten. Darüber hinaus ist die Auswerteeinheit 10 mithilfe der in der Auswerteeinheit 10 hinterlegten Software dazu eingerichtet, eine Drehzahl der Antriebseinheit 9 sowie eine Stellgröße der Zufördereinheit 6 zu steuern, insbesondere in Abhängigkeit der Messsignale der Kraftmesseinrichtung 7 und der Drehzahlmesseinrichtung 8.

Des Weiteren ist das Dosiersystem 1 mit einem Kompressor 11 ausgestattet, welcher mit der Auswerteeinheit 10 verbunden ist und von dieser steuerbar ist. Der Kompressor 11 ist an das Messgerät 3 angeschlossen.

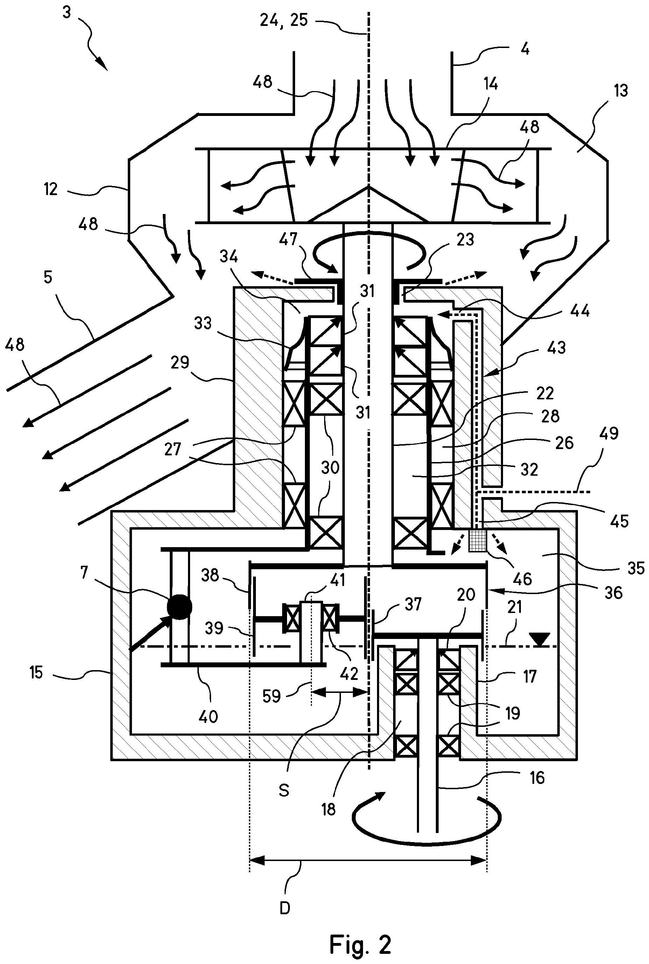

Figur 2 zeigt das Messgerät 3 aus Figur 1 in einer schematischen Längsschnittdarstellung.

Das Messgerät 3 umfasst ein erstes Gehäuse 12 zum Führen eines Materialstroms. Dieses Gehäuse 12 weist den zuvor erwähnten Einlass 4 und den zuvor erwähnten Auslass 5 auf (vgl. Figur 1). Zudem weist das erste Gehäuse 12 einen Messradraum 13 auf, in welchem ein beschaufeltes Messrad 14 des Messgeräts 3 angeordnet ist.

Des Weiteren umfasst das Messgerät 3 ein zweites Gehäuse 15, welches teilweise innerhalb des ersten Gehäuses 12 angeordnet ist. Das Messrad 14 ist oberhalb des zweiten Gehäuses 15 positioniert.

Außerdem umfasst das Messgerät 3 eine Antriebswelle 16, welche mithilfe der Antriebseinheit 9 aus Figur 1 antreibbar ist und teilweise innerhalb des zweiten Gehäuses 15 angeordnet ist. Ein Teil der Antriebswelle 16 ist von einer hohlzylindrischen Innenwandung 17 des zweiten Gehäuses 15 umgeben.

Innerhalb eines Spalts 18 zwischen der Antriebswelle 16 und besagter Innenwandung 17 des zweiten Gehäuses 15 weist das Messgerät 3 zwei als radiale Wälzlager ausgebildete Lager 19 auf, mittels welcher die Antriebswelle 16 rotierbar gelagert ist. Ferner weist das Messgerät 3 innerhalb des Spalts 18 zwischen der Antriebswelle 16 und der Innenwandung 17 des zweiten Gehäuses 15 ein Dichtelement 20 auf, welches den Spalt 18 abgedichtet.

Zweck einer besseren Leichtgängigkeit der Antriebswelle 16 weist das Messgerät 3 im zweiten Gehäuse 15 eine Schmiermittelfüllung 21 auf. Als Schmiermittel wird vorzugsweise Öl verwendet.

Weiter ist das Messgerät 3 mit einer Abtriebswelle 22 ausgestattet, welche starr mit dem Messrad 14 verbunden ist. Die Abtriebswelle 22 ist teilweise innerhalb des zweiten Gehäuses 15 angeordnet, wobei die Abtriebswelle 22 durch eine Öffnung 23 des zweiten Gehäuses 15, welche sich innerhalb des Messradraums 13 des ersten Gehäuses 12 befindet, hindurchgeführt ist. Zudem weist die Abtriebswelle 22 eine Symmetrieachse 24 auf, die zugleich die gemeinsame Rotationsachse 25 der Abtriebswelle 22 und des Messrads 14 ist.

Darüber hinaus weist das Messgerät 3 eine axialsymmetrische Lagerhülse 26 zur drehbaren Lagerung der Abtriebswelle 22 auf, welche einen Teil der Abtriebswelle 22 umgibt und die innerhalb des zweiten Gehäuses 15 angeordnet ist.

Im vorliegenden Ausführungsbeispiel umfasst das Messgerät 3 zwei als radiale Wälzlager ausgebildete Lager 27 zur drehbaren Lagerung der Lagerhülse 26. Diese beiden Lager 27 sind in einem Spalt 28 zwischen einer die Lagerhülse 26 umgebenden, hohlzylindrisch ausgebildeten Wandung 29 des zweiten Gehäuses 15 und der Lagerhülse 26 angeordnet.

Darüber hinaus weist das Messgerät 3 im vorliegenden Ausführungsbeispiel zwei weitere als radiale Wälzlager ausgebildete Lager 30 auf, die zwischen der Lagerhülse 26 und der Abtriebswelle 22 angeordnet sind. Mittels dieser beiden Lager 30 ist die Abtriebswelle 22 drehbar in der Lagerhülse 26 gelagert.

Des Weiteren umfasst das Messgerät 3 zwei Dichtelemente 31, die zwischen der Abtriebswelle 22 und der Lagerhülse 26 angeordnet sind und einen Spalt 32 zwischen der Abtriebswelle 22 und der Lagerhülse 26 staub- und gasdicht abdichten.

Darüber hinaus weist das Messgerät 3 ein flexibles Dichtelement 33 auf, welches am zweiten Gehäuse 15 befestigt ist und mit der Abtriebswelle 22 in Kontakt ist. Dieses Dichtelement 33 weist eine dem Messrad 14 zugewandte Vorderseite sowie eine dem Messrad 14 abgewandte Rückseite auf und unterteilt den Innenraum des zweiten Gehäuses 15 gas- und staubdicht in einen an die Vorderseite des Dichtelements 33 grenzenden ersten Teilraum 34 und einen an die Rückseite des Dichtelements 33 grenzenden zweiten Teilraum 35. Mithilfe dieses Dichtelements 33 wird der Spalt 28 zwischen der Lagerhülse 26 und der die Lagerhülse 26 umgebenden Wandung 29 abgedichtet.

Außerdem umfasst das Messgerät 3 ein im zweiten Gehäuse 15 angeordnetes Getriebe 36 zum Übertragen eines Drehmoments von der Antriebswelle 16 auf die Abtriebswelle 22. Dieses Getriebe 36 umfasst ein starr mit der Antriebswelle 16 verbundenes erstes Getriebeelement 37, ein starr mit der Abtriebswelle 22 verbundenes zweites Getriebeelement 38 sowie ein Zwischenelement 39 zum Übertragen eines Drehmoments vom ersten Getriebeelement 37 auf das zweite Getriebeelement 38.

Das erste und zweite Getriebeelement 37, 38 sowie das Zwischenelement 39 sind jeweils als Zahnrad, genauer gesagt als Stirnrad, ausgebildet, wobei das Zwischenelement 39 mit dem ersten und dem zweiten Getriebeelement 37, 38 in Eingriff steht. Im vorliegenden Ausführungsbeispiel sind das erste Getriebeelement 37 und das Zwischenelement 39 jeweils als außenverzahntes Zahnrad ausgebildet, wohingegen das zweite Getriebeelement 38 als innenverzahntes Zahnrad ausgebildet ist.

Ferner sind das erste Getriebeelement 37 und das Zwischenelement 39 im vorliegenden Ausführungsbeispiel gleich dimensioniert. Das erste Getriebeelement 37 und das Zwischenelement 39 haben somit insbesondere den gleichen Wirkdurchmesser (auch Wälzkreisdurchmesser genannt). Das zweite Getriebeelement 38 hingegen hat einen größeren Wirkdurchmesser als das erste Getriebeelement 37 und das Zwischenelement 39.

Außer den drei genannten Zahnrädern des Getriebes 36 - also dem ersten und zweiten Getriebeelement 37, 38 sowie dem Zwischenelement 39 - umfasst das Messgerät 3 keine weiteren Zahnräder.

Weiter weist das Messgerät 3 im zweiten Gehäuse 15 eine starr mit der Lagerhülse 26 verbundene Schwinge 40 auf. Die zuvor erwähnte Kraftmesseinrichtung 7 des Messgeräts 3 ist mit der Schwinge 40 verbunden, sodass mittels der Kraftmesseinrichtung 7 eine auf die Schwinge 40 übertragene Kraft messbar ist.

Des Weiteren umfasst das Messgerät 3 ein starr mit der Schwinge 40 verbundenes Achselement 41, mittels welchem das Zwischenelement 39 an der Schwinge 40 abgestützt ist, sowie ein zwischen dem Achselement 41 und dem Zwischenelement 39 angeordnetes Lager 42, mittels welchem das Zwischenelement 39 um das Achselement 41 drehbar gelagert ist. Das letztgenannte Lager 42 ist als radiales Wälzlager ausgebildet. Besagtes Achselement 41 ist parallel zur Abtriebswelle 22 angeordnet, wobei die Symmetrieachse 59 des Achselements 41 einen Abstand S zur Rotationsachse 25 der Abtriebswelle 22 aufweist, der einem Viertel des Wirkdurchmessers D des zweiten Getriebeelements 38 entspricht.

Die Schwinge 40 wird von der Kraftmesseinrichtung 7 festgehalten. Dadurch können die Lagerhülse 26 und die Schwinge 40 nur in so geringem Maße rotieren, wie es eine elastische Verformung der Kraftmesseinrichtung 7, welche unter einer Krafteinwirkung auf die Kraftmesseinrichtung 7 auftritt, zulässt.

Außerdem ist das Messgerät 3 mit einer Sperrgaseinrichtung 43 zum Einleiten von Sperrgas in das zweite Gehäuse 15 ausgestattet. Die Sperrgaseinrichtung 43 umfasst einen ersten Sperrgaseinlass 44 zum Einleiten von Sperrgas in den ersten Teilraum 34 des zweiten Gehäuses 15 sowie einen zweiten Sperrgaseinlass 45 zum Einleiten von Sperrgas in den zweiten Teilraum 35 des zweiten Gehäuses 15. Im vorliegenden Ausführungsbeispiel weist der zweite Sperrgaseinlass 45 ein optionales Filterelement 46 zum Filtern von Sperrgas auf. Mithilfe des Filterelements 46 kann verhindert werden, dass über den zweiten Sperrgaseinlass 45 Verunreinigungen in die Schmiermittelfüllung 21 eingebracht werden.

Darüber hinaus umfasst das Messgerät 3 einen Schwebering 47, durch welchen die Abtriebswelle 22 des Messgeräts 3 hindurchgeführt ist. Der Schwebering 47 dient zum Abdichten der im Messradraum 13 angeordneten Öffnung 23 des zweiten Gehäuses 15, durch welche die Abtriebswelle 22 hindurchgeführt ist, insbesondere im Falle einer Unterbrechung bzw. eines Ausfalls der Sperrgaszufuhr.

Im Betrieb des Dosiersystems 1 aus Figur 1 wird die Antriebswelle 16 des Messgeräts 3 mithilfe der Antriebseinheit 9 des Dosiersystems 1 derart angetrieben, dass das Messrad 14 mit konstanter Drehzahl rotiert. Das Getriebe 36 des Messgeräts 3 überträgt hierbei ein Drehmoment von der Antriebswelle 16 auf die Abtriebswelle 22, welche ihrerseits das Messrad 14 antreibt.

Wird mithilfe der Zufördereinheit 6 des Dosiersystems 1 ein Materialstrom 48, beispielsweise ein Schüttgutstrom, in den Einlass 4 des Messgeräts 3 eingebracht, trifft der Materialstrom 48 von oben auf das Messrad 14.

Der Materialstrom 48 wird durch das Messrad 14 radial nach außen umgelenkt. Aufgrund des Coriolis-Prinzips wirkt dabei auf das Messrad 14 eine Reaktionskraft, die proportional zum Massendurchsatz des Massenstroms 48 ist. Diese Reaktionskraft wird über das zweite Getriebeelement 38 auf das Zwischenelement 39 des Getriebes 36 übertragen. Über das Zwischenelement 39 wird die Reaktionskraft auf die Schwinge 40 übertragen. Die auf die Schwinge 40 übertragene Reaktionskraft wirkt auf die mit der Schwinge 40 verbundene Kraftmesseinrichtung 7, die ein von der Reaktionskraft abhängiges Messsignal erzeugt und dieses Messsignal an die Auswerteeinheit 10 aus Figur 1 übermittelt.

Die Kraft, die auf die Kraftmesseinrichtung 7 wirkt, ist von reibungsbedingten Störkräften, die auf Reibung zwischen der Abtriebswelle 22 und den zwischen der Abtriebswelle 22 und der Lagerhülse 26 angeordneten Lagern 30 und Dichtelementen 31 zurückzuführen sind, befreit. Mit anderen Worten, von der Kraftmesseinrichtung 7 wird nur die relevante Reaktionskraft, die aufgrund der Umlenkung des Materialstroms 48 auf das Messrad 14 wirkt, erfasst.

Der vom Messrad 14 umgelenkte Massenstrom 48 wird vom ersten Gehäuse 12 zu dessen Auslass 5 geführt, von wo aus der Materialstrom 48 das erste Gehäuse 12 verlässt.

Von der (in Figur 2 nicht dargestellten) Drehzahlmesseinrichtung 8 wird ein von der Drehzahl des Messrads 14 abhängiges Messsignal erzeugt und dieses Messsignal an die Auswerteeinheit 10 übermittelt.

Anhand der Messsignale, die die Auswerteeinheit 10 von der Kraftmesseinrichtung 7 und der Drehzahlmesseinrichtung 8 erhält, ermittelt die Auswerteeinheit 10 den Massendurchsatz des Materialstroms 48.

Um einen definierten, von einem Benutzer vorgebbaren Massendurchsatz des Materialstroms 48 zu erhalten, wird von der Auswerteeinheit 10 eine Stellgröße der Zufördereinheit 6 aus Figur 1 auf einen passenden Wert eingestellt.

Mithilfe des Kompressors 11 aus Figur 1 wird das Messgerät 3 mit einem Sperrgas 49 versorgt. Über den ersten Sperrgaseinlass 44 wird das Sperrgas 49 mit einem erhöhten Druck, beispielsweise mit einem Druck von 2 bar, in den ersten Teilraum 34 des zweiten Gehäuses 15 eingeleitet. Als Sperrgas 49 kann zum Beispiel Luft genutzt werden.

Das in den ersten Teilraum 34 eingeleitete Sperrgas 49 strömt über die Öffnung 23 des zweiten Gehäuses 15, durch welche die Abtriebswelle 22 hindurchgeführt ist, aus dem ersten Teilraum 34 in Richtung des Messrads 14 aus dem zweiten Gehäuse 15 heraus. Auf diese Weise wird ein Eindringen von Partikeln, insbesondere von Schüttgutpartikeln, in das zweite Gehäuse 15 verhindert oder zumindest reduziert. Das Sperrgas 49 erzeugt dabei keine oder nur vernachlässigbare Reibungskräfte an der Abtriebswelle 22.

Der Druck des Sperrgases 49 kann in Abhängigkeit des im Messradraum 13 vorherrschenden Drucks eingestellt werden. Zweckmäßigerweise wird der Druck des Sperrgases 49 so eingestellt, dass er oberhalb des Drucks im Messradraum 13 liegt. Dadurch kann auch im Falle einer druckbehafteten Förderung des Materialstroms 48 das Eindringen von (Schüttgut-)Partikeln in das zweite Gehäuse 15 vermieden werden.

Eine etwaige Verformung des den Spalt 28 zwischen dem zweiten Gehäuse 15 und der Lagerhülse 26 abdichtenden flexiblen Dichtelements 33, welche auf dem erhöhten Sperrgasdruck im ersten Teilraum 34 beruht, kann dazu führen, dass sich dieses Dichtelement 33 derart an die Lagerhülse 26 anlegt, dass das Dichtelement 33 im Betrieb des Messgeräts 3 ein unerwünschtes Reib-/Bremsmoment auf die Lagerhülse 26 ausübt, welches zu Messfehlern führt. Um zu vermeiden, dass sich das flexible Dichtelement 33 durch den erhöhten Sperrgasdruck im ersten Teilraum 34 verformt, wird das Sperrgas 49 auch über den zweiten Sperrgaseinlass 45 in den zweiten Teilraum 35 eingeleitet. Auf diese Weise werden die Vorderseite und die Rückseite des flexiblen Dichtelements 33 mit dem gleichen Sperrgasdruck beaufschlagt, sodass eine druckbedingte Verformung des flexiblen Dichtelements 33 vermieden wird.

Mithilfe des flexiblen Dichtelements 33, das den Spalt 28 zwischen dem zweiten Gehäuse 15 und der Lagerhülse 26 abdichtet, kann verhindert werden, dass im Falle einer Unterbrechung bzw. eines Ausfalls der Sperrgaszufuhr (Schüttgut-)Partikel in besagten Spalt 28 eindringen. Das flexible Dichtelement 33 dient somit insbesondere dem Schutz der im Spalt 28 zwischen dem zweiten Gehäuse 15 und der Lagerhülse 26 angeordneten Lager 27.

Liegt die Druckdifferenz aus dem Druck im ersten Teilraum 34 und dem Druck im Messradraum 13 oberhalb eines vorgegebenen Druckwerts, kann das Sperrgas 49 über besagte Öffnung 23 aus dem ersten Teilraum 34 austreten. Dabei wird der Schwebering 47 durch das austretende Sperrgas "in der Schwebe" gehalten. Durch das austretende Sperrgas 49 wird ein Eindringen von (Schüttgut-)Partikeln in den Spalt 28 zwischen der Lagerhülse 26 und der die Lagerhülse 26 umgebenden Wandung 29 des zweiten Gehäuses 15 verhindert oder zumindest reduziert.

Unterschreitet die Druckdifferenz aus dem Druck im ersten Teilraum 34 und dem Druck im Messradraum 13 den vorgegebenen Druckwert (zum Beispiel aufgrund einer Unterbrechung bzw. eines Ausfalls der Sperrgaszufuhr), verschließt der Schwebering 47 besagte Öffnung 23 des zweiten Gehäuses 15 automatisch und verhindert dadurch ein Eindringen von (Schüttgut-)Partikeln in den Spalt 28 zwischen der Lagerhülse 26 und der die Lagerhülse 26 umgebenden Wandung 29 des zweiten Gehäuses 15.

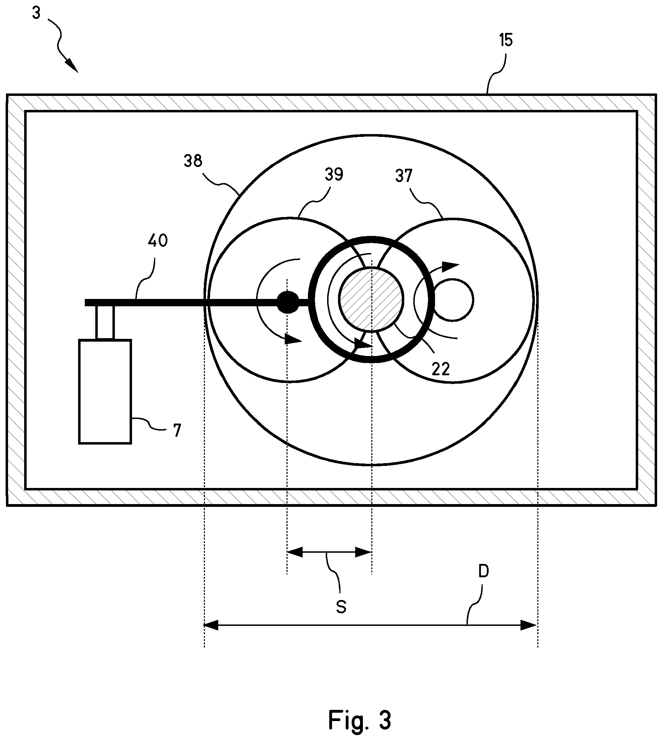

Figur 3 zeigt eine schematische Querschnittdarstellung des Messgeräts 3 aus Figur 2.

In Figur 3 sind das erste und das zweite Getriebeelement 37, 38 sowie das Zwischenelement 39 des Getriebes 36 abgebildet. Darüber hinaus sind in Figur 3 die Kraftmesseinrichtung 7, die Schwinge 40, die Abtriebswelle 22 und das zweite Gehäuse 15 des Messgeräts 3 dargestellt.

Des Weiteren sind in Figur 3 exemplarische Drehrichtungen des ersten und zweiten Getriebeelements 37, 38 sowie des Zwischenelements 39 eingezeichnet. Wenn das erste Getriebeelement 37 derart angetrieben wird, dass das erste Getriebeelement 37 (in der Perspektive aus Figur 3) im Uhrzeigersinn rotiert, rotiert das Zwischenelement 39 entgegen dem Uhrzeigersinn. Da das zweite Getriebeelement 38 als innenverzahntes Zahnrad ausgebildet ist, rotieren das zweite Getriebeelement 38 und die starr mit dem zweiten Getriebeelement 38 verbundene Abtriebswelle 22 in diesem Fall ebenfalls entgegen dem Uhrzeigersinn. Das heißt, das Zwischenelement 39 hat die gleiche Drehrichtung wie das zweite Getriebeelement 38 und die Abtriebswelle 22, wohingegen die Drehrichtung des ersten Getriebeelements 37 entgegengesetzt zur Drehrichtung des zweiten Getriebeelements 38, des Zwischenelements 39 und der Abtriebswelle 22 ist.

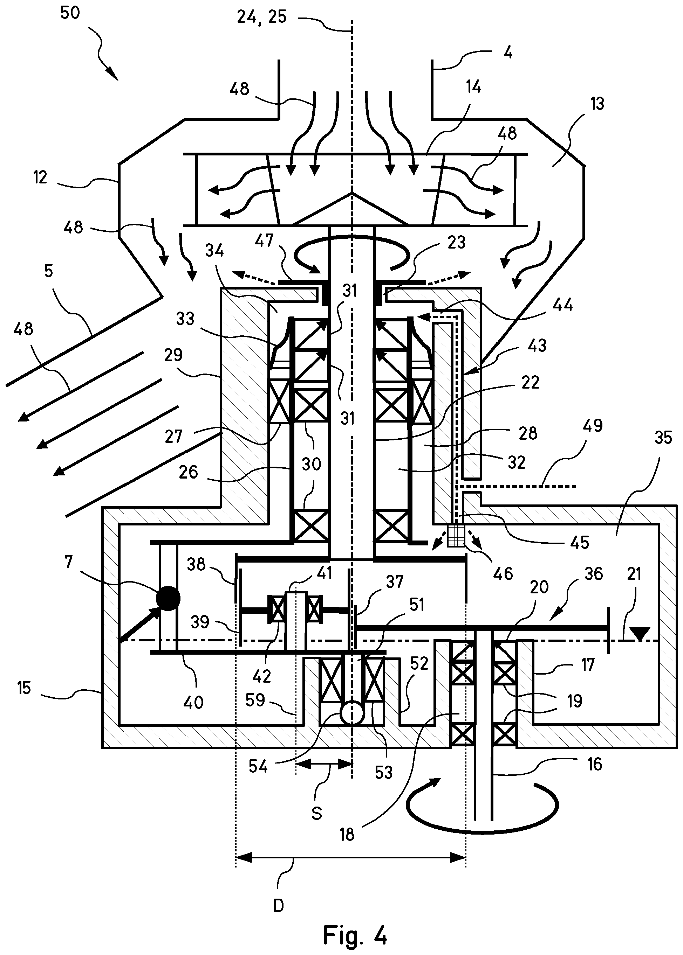

Figur 4 zeigt eine schematische Längsschnittdarstellung einer anderen Ausführungsvariante eines Messgeräts 50 zum Messen eines Massendurchsatzes eines Materialstroms, insbesondere eines Schüttgutstroms, nach dem Coriolis-Prinzip. Dieses Messgerät 50 kann beispielsweise anstelle des Messgeräts 3 aus Figur 2 in dem Dosiersystem 1 aus Figur 1 eingesetzt werden.

Die nachfolgenden Ausführungen zu dem Messgerät 50 aus Figur 4 beziehen sich primär auf die Unterschiede zu dem Messgerät 3 aus Figur 2, auf das bezüglich gleicher Merkmale und Funktionen verwiesen wird.

Bei der Ausführungsvariante aus Figur 4 sind das erste Getriebeelement 37 und das Zwischenelement 39 des Getriebes 36 unterschiedlich dimensioniert. Das heißt, das erste Getriebeelement 37 und das Zwischenelement 39 haben unterschiedliche Wirkdurchmesser.

Des Weiteren weist die Schwinge 40 einen zylindrischen Fortsatz 51 auf. Der Fortsatz 51 der Schwinge 40 ist unterhalb der Abtriebswelle 22 angeordnet. Außerdem ist der Fortsatz 51 koaxial zur Abtriebswelle 22 angeordnet. Somit bildet die Symmetrieachse 24 der Abtriebswelle 22 zugleich die Symmetrieachse des Fortsatzes 51. Außerdem weist das zweite Gehäuse 15 eine hohlzylindrische Innenwandung 52 auf, welche den Fortsatz 51 der Schwinge 40 umgibt.

Das Messgerät 50 aus Figur 4 weist statt zweier Lager 27, die zwischen der Lagerhülse 26 und der die Lagerhülse 26 umgebenden Wandung 29 des zweiten Gehäuses 15 angeordnet sind, nur ein solches Lager 27 auf. Jedoch weist dieses Messgerät 50 ein als Wälzlager ausgebildetes Radiallager 53 zur drehbaren Lagerung der Schwinge 40 auf, welches zwischen dem Fortsatz 51 und der den Fortsatz 51 umgebenden Innenwandung 52 des zweiten Gehäuses 15 angeordnet ist.

Zusätzlich weist das Messgerät 50 aus Figur 4 im zweiten Gehäuse 15 ein als Kugel ausgebildetes Axiallager 54 auf, auf welchem der Fortsatz 51 der Schwinge 40 abgestützt ist. Der Fortsatz 51 der Schwinge 40, das Axiallager 54 und das zwischen dem Fortsatz 51 und der den Fortsatz 51 umgebenden Innenwandung 52 angeordnete Radiallager 53 befinden sich innerhalb der Schmiermittelfüllung 21, was sich vorteilhaft auf die Leichtgängigkeit des Radiallagers 53 und des Axiallagers 54 auswirkt.

Besagtes Axiallager 54 nimmt Axialkräfte punktuell an der Rotationsachse 25 der Abtriebswelle 22 auf. Mögliche Reibungskräfte zwischen dem zweiten Gehäuse 15 und der Schwinge 40 bzw. zwischen dem zweiten Gehäuse 15 und der Lagerhülse 26 haben dadurch keinen wirksamen Hebelarm. Das Radiallager 53 zwischen dem Fortsatz 51 und der den Fortsatz 51 umgebenden Innenwandung 52 sowie das Lager 27 zwischen der Lagerhülse 26 und der die Lagerhülse 26 umgebenden Wandung 29 müssen daher keine Axialkräfte, sondern nur Radialkräfte aufnehmen.

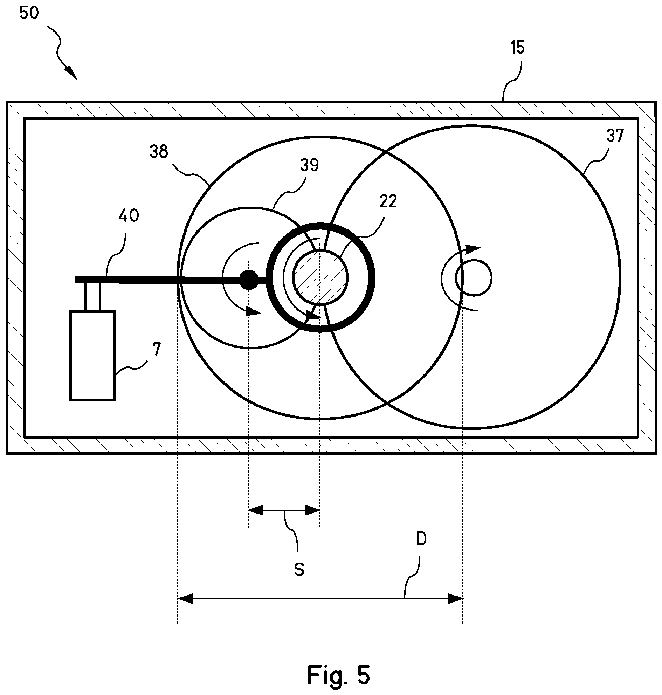

Figur 5 zeigt eine schematische Querschnittdarstellung des Messgeräts 50 aus Figur 4.

Analog zu Figur 3 sind in Figur 5 das erste und das zweite Getriebeelement 37, 38, das Zwischenelement 39, die Kraftmesseinrichtung 7, die Schwinge 40, die Abtriebswelle 22 und das zweite Gehäuse 15 des Messgeräts 50 aus Figur 4 dargestellt. Ebenso sind in Figur 5 exemplarische Drehrichtungen des ersten und zweiten Getriebeelements 37, 38 sowie des Zwischenelements 39 eingezeichnet.

Wie aus Figur 5 ersichtlich ist, hat das erste Getriebeelement 37 in der vorliegenden Ausführungsvariante einen größeren Wirkdurchmesser als das Zwischenelement 39 und das zweite Getriebeelement 38.

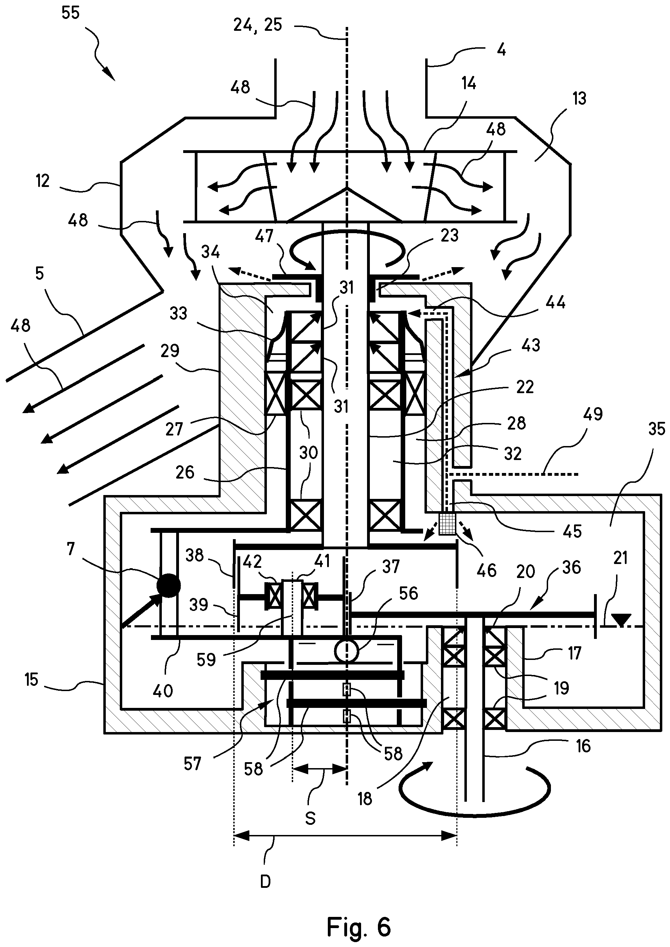

Figur 6 zeigt eine schematische Längsschnittdarstellung einer weiteren Ausführungsvariante eines Messgeräts 55 zum Messen eines Massendurchsatzes eines Materialstroms, insbesondere eines Schüttgutstroms, nach dem Coriolis-Prinzip. Dieses Messgerät 55 kann beispielsweise anstelle des Messgeräts 3 aus Figur 2 in dem Dosiersystem 1 aus Figur 1 eingesetzt werden.

Die nachfolgenden Ausführungen zu dem Messgerät 55 aus Figur 6 beziehen sich primär auf die Unterschiede zu dem Messgerät 3 aus Figur 2, auf das bezüglich gleicher Merkmale und Funktionen verwiesen wird.

Bei der Ausführungsvariante aus Figur 6 hat das erste Getriebeelement 37 einen größeren Wirkdurchmesser als das Zwischenelement 39 und das zweite Getriebeelement 38.

Außerdem weist das Messgerät 55 aus Figur 6 statt zweier Lager 27, die zwischen der Lagerhülse 26 und der die Lagerhülse 26 umgebenden Wandung 29 des zweiten Gehäuses 15 angeordnet sind, nur ein solches Lager 27 auf.

Bei der vorliegenden Ausführungsvariante weist das Messgerät 55 ein als Kugel ausgebildetes Abstützelement 56, auf welchem die Schwinge 40 punktuell an der Rotationsachse 25 der Abtriebswelle 22 abgestützt ist. Darüber hinaus umfasst das Messgerät 55 ein doppelt wirkendes Kreuzfederelement 57, auf welchem das Abstützelement 56 abgestützt ist und das wie das in DE 103 30 947 B4 beschriebene Kreuzfederelement ausgebildet ist. Das Kreuzfederelement 57 umfasst zwei Blattfederpaare mit jeweils zwei Blattfedern 58, wobei sich die beiden Blattfedern 58 des jeweiligen Blattfederpaars an der Rotationsachse 25 der Abtriebswelle 22 kreuzen, insbesondere in einem rechten Winkel.

Die Schwinge 40 ist mithilfe des Abstützelements 56 und des Kreuzfederelements 57 im zweiten Gehäuse 15 gelagert. Diese Art der Lagerung zeichnet sich durch eine hohe Unempfindlichkeit gegenüber Verunreinigungspartikeln in der Schmierstofffüllung 21 und eine im Wesentlichen reibungsfreie Beweglichkeit der Schwinge 40 aus.

Die Erfindung wurde anhand der dargestellten Ausführungsbeispiele detailliert beschrieben. Dennoch ist die Erfindung nicht auf oder durch die offenbarten Beispiele beschränkt. Andere Varianten können vom Fachmann aus diesen Ausführungsbeispielen abgeleitet werden, ohne von der Erfindung abzuweichen Die Erfindung ist allein durch die angefügten Patentansprüche definiert.

### Bezugszeichenliste

- 1: Dosiersystem
- 2: Messsystem
- 3: Messgerät
- 4: Einlass
- 5: Auslass
- 6: Zufördereinheit
- 7: Kraftmesseinrichtung
- 8: Drehzahlmesseinrichtung
- 9: Antriebseinheit
- 10: Auswerteeinheit
- 11: Kompressor
- 12: Gehäuse
- 13: Messradraum
- 14: Messrad
- 15: Gehäuse
- 16: Antriebswelle
- 17: Innenwandung
- 18: Spalt
- 19: Lager
- 20: Dichtelement
- 21: Schmiermittelfüllung
- 22: Abtriebswelle
- 23: Öffnung
- 24: Symmetrieachse
- 25: Rotationsachse
- 26: Lagerhülse
- 27: Lager
- 28: Spalt
- 29: Wandung
- 30: Lager
- 31: Dichtelement
- 32: Spalt
- 33: Dichtelement
- 34: Teilraum
- 35: Teilraum
- 36: Getriebe
- 37: Getriebeelement
- 38: Getriebeelement
- 39: Zwischenelement
- 40: Schwinge
- 41: Achselement
- 42: Lager
- 43: Sperrgaseinrichtung
- 44: Sperrgaseinlass
- 45: Sperrgaseinlass
- 46: Filterelement
- 47: Schwebering
- 48: Materialstrom
- 49: Sperrgas
- 50: Messgerät
- 51: Fortsatz
- 52: Innenwandung
- 53: Radiallager
- 54: Axiallager
- 55: Messgerät
- 56: Abstützelement
- 57: Kreuzfederelement
- 58: Blattfeder
- 59: Symmetrieachse
- S: Abstand
- D: Wirkdurchmesser

## Patentansprüche

1. Messgerät (3, 50, 55) zum Messen eines Massendurchsatzes eines Materialstroms (48), insbesondere eines Schüttgutstroms, nach dem Coriolis-Prinzip, umfassend ein rotierbar gelagertes, beschaufeltes Messrad (14) zum Umlenken des Materialstroms (48), eine Antriebswelle (16) zum Antreiben des Messrads (14), eine starr mit dem Messrad (14) verbundene Abtriebswelle (22), eine zumindest einen Teil der Abtriebswelle (22) umgebende Lagerhülse (26) zur drehbaren Lagerung der Abtriebswelle (22), eine Kraftmesseinrichtung (7) und ein Getriebe (36), das ein starr mit der Antriebswelle (16) verbundenes erstes Getriebeelement (37), ein starr mit der Abtriebswelle (22) verbundenes zweites Getriebeelement (38) sowie ein Zwischenelement (39) zum Übertragen eines Drehmoments vom ersten Getriebeelement (37) auf das zweite Getriebeelement (38) aufweist,
**gekennzeichnet durch**
eine starr mit der Lagerhülse (26) verbundene Schwinge (40), an der das Zwischenelement (39) des Getriebes (36) gelagert ist, wobei die Kraftmesseinrichtung (7) mit der Schwinge (40) verbunden ist, sodass mittels der Kraftmesseinrichtung (7) eine auf die Schwinge (40) übertragene Kraft messbar ist.

2. Messgerät (3, 50, 55) nach Anspruch 1,
**dadurch gekennzeichnet,**
**dass** das erste Getriebeelement (37), das zweite Getriebeelement (38) und das Zwischenelement (39) jeweils als Zahnrad, insbesondere als Stirnrad, ausgebildet sind, wobei das Zwischenelement (39) mit dem ersten und dem zweiten Getriebeelement (37, 38) in Eingriff steht.

3. Messgerät (3, 50, 55) nach Anspruch 1 oder 2,
**dadurch gekennzeichnet,**
**dass** das erste Getriebeelement (37) und das Zwischenelement (39) jeweils als außenverzahntes Zahnrad ausgebildet sind und das zweite Getriebeelement (38) als innenverzahntes Zahnrad ausgebildet ist.

4. Messgerät (3, 50, 55) nach einem der voranstehenden Ansprüche,
**gekennzeichnet durch**
mindestens ein zwischen der Abtriebswelle (22) und der Lagerhülse (26) angeordnetes Lager (30), mittels welchem die Abtriebswelle (22) in der Lagerhülse (26) drehbar gelagert ist.

5. Messgerät (3, 50, 55) nach einem der voranstehenden Ansprüche,
**gekennzeichnet durch**
mindestens ein Lager (27) zur drehbaren Lagerung der Lagerhülse (26).

6. Messgerät (3, 50, 55) nach einem der voranstehenden Ansprüche,
**dadurch gekennzeichnet,**
**dass** die Schwinge (40) von der Kraftmesseinrichtung (7) festgehalten wird.

7. Messgerät (3, 50, 55) nach einem der voranstehenden Ansprüche,
**gekennzeichnet durch**
mindestens ein Dichtelement (31), welches einen Spalt (32) zwischen der Lagerhülse (26) und der Abtriebswelle (22) abdichtet.

8. Messgerät (3, 50, 55) nach einem der voranstehenden Ansprüche,
**gekennzeichnet durch**
ein starr mit der Schwinge (40) verbundenes Achselement (41), mittels welchem das Zwischenelement (39) des Getriebes (36) an der Schwinge (40) abgestützt ist, und ein zwischen dem Achselement (41) und dem Zwischenelement (39) angeordnetes Lager (42), mittels welchem das Zwischenelement (39) um das Achselement (41) drehbar gelagert ist.

9. Messgerät (3, 50, 55) nach einem der voranstehenden Ansprüche,
**gekennzeichnet durch**
ein Gehäuse (15), in welchem die Schwinge (40), das Getriebe (36) und die Lagerhülse (26) angeordnet sind.

10. Messgerät (3, 50, 55) nach Anspruch 9,
**gekennzeichnet durch**
einen Schwebering (47) zum Abdichten einer Öffnung (23) des Gehäuses (15), durch welche die Abtriebswelle (22) hindurchgeführt ist, wobei die Abtriebswelle (22) durch den Schwebering (47) hindurchgeführt ist.

11. Messgerät (3, 50, 55) nach Anspruch 9 oder 10,
**gekennzeichnet durch**
eine Sperrgaseinrichtung (43) zum Einleiten von Sperrgas (49) in das Gehäuse (15).

12. Messgerät (50) nach einem der Ansprüche 9 bis 11,
**gekennzeichnet durch**
mindestens ein zwischen einer Wandung (52) des Gehäuses (15) und einem zylindrischen Fortsatz (51) der Schwinge (40) angeordnetes Radiallager (53) zur drehbaren Lagerung der Schwinge (40) im Gehäuse (15) und ein Axiallager (54), auf welchem der zylindrische Fortsatz (51) der Schwinge (40) abgestützt ist.

13. Messgerät (55) nach einem der Ansprüche 9 bis 11,
**gekennzeichnet durch**
ein Kreuzfederelement (57), welches mehrere sich kreuzende Federn (58) umfasst, und ein Abstützelement (56) zur punktuellen Abstützung der Schwinge (40), wobei die Schwinge (40) mithilfe des Kreuzfederelements (57) und des Abstützelements (56) im Gehäuse (15) gelagert ist.

14. Verfahren zum Betreiben eines Messgeräts (3, 50, 55) nach einem der voranstehenden Ansprüche, bei dem das Messrad (14) mittels einer mit der Antriebswelle (16) verbundenen Antriebseinheit (9) angetrieben wird und das Messrad (14) von einem Materialstrom (48), insbesondere einem Schüttgutstrom, beaufschlagt wird, wobei der Materialstrom (48) vom Messrad (14) umgelenkt wird, auf das Messrad (14) eine Reaktionskraft wirkt, die über das Zwischenelement (39) des Getriebes (36) auf die Schwinge (40) übertragen wird, und von der Kraftmesseinrichtung (7) ein von der Reaktionskraft abhängiges Messsignal erzeugt wird, anhand dessen ein Massendurchsatz des Materialstroms (48) ermittelbar ist.

15. Messsystem (2), umfassend ein Messgerät (3, 50, 55) nach einem der Ansprüche 1 bis 13 sowie eine Auswerteeinheit (10), welche dazu eingerichtet ist, unter Verwendung eines Messsignals der Kraftmesseinrichtung (7) des Messgeräts (3, 50, 55) einen Massendurchsatz eines das Messrad (14) des Messgeräts (3, 50, 55) beaufschlagenden Materialstroms (48) zu ermitteln.

16. Verfahren nach Anspruch 14 zum Betreiben eines das Messgerät (3, 50, 55) umfassenden Messsystems (2) nach Anspruch 15, wobei von der Auswerteeinheit (10) des Messsystems (2) anhand des Messsignals ein Massendurchsatz des Materialstroms (48) ermittelt wird.

17. Verfahren nach Anspruch 16,
**dadurch gekennzeichnet,**
**dass** eine Drehzahl des Messrads (14) gemessen wird und der Massendurchsatz des Materialstroms (48) von der Auswerteeinheit (10) unter Verwendung der gemessenen Drehzahl des Messrads (14) ermittelt wird.

18. Dosiersystem (1), umfassend ein Messgerät (3, 50, 55) nach einem der Ansprüche 1 bis 13, eine Zufördereinheit (6) zum Einleiten des Materialstroms (48) in das Messgerät (3, 50, 55) sowie eine Auswerteeinheit (10), die dazu eingerichtet ist, unter Verwendung eines Messsignals der Kraftmesseinrichtung (7) des Messgeräts (3, 50, 55) durch Steuern oder Regeln einer Stellgröße der Zufördereinheit (6) einen definierten Massendurchsatz des Materialstroms (48) einzustellen.

## Claims

1. A measuring device (3, 50, 55) for measuring a mass flow rate of a material flow (48), in particular a bulk material flow, in accordance with the Coriolis principle, comprising a rotatably mounted, bladed measurement wheel (14) for deflecting the material flow (48), a drive shaft (16) for driving the measurement wheel (14), an output shaft (22) rigidly connected to the measurement wheel (14), a bearing sleeve (26), surrounding at least part of the output shaft (22), for the rotatable mounting of the output shaft (22), a force-measuring apparatus (7), and a gearbox (36) which has a first gearbox element (37) rigidly connected to the drive shaft (16), a second gearbox element (38) rigidly connected to the output shaft (22), and an intermediate element (39) for transmitting a torque from the first gearbox element (37) to the second gearbox element (38), **characterized by**
a rocker (40) which is rigidly connected to the bearing sleeve (26) and on which the intermediate element (39) of the gearbox (36) is mounted, wherein the force-measuring apparatus (7) is connected to the rocker (40), so that a force transmitted to the rocker (40) can be measured by means of the force-measuring apparatus (7).

2. The measuring device (3, 50, 55) according to claim 1, **characterized in that** the first gearbox element (37), the second gearbox element (38), and the intermediate element (39) are each designed as a gear, in particular as a spur gear, wherein the intermediate element (39) engages with the first and second gearbox element (37, 38).

3. The measuring device (3, 50, 55) according to claim 1 or 2, **characterized in that** the first gearbox element (37) and the intermediate element (39) are each designed as an external gear and the second gearbox element (38) is designed as an internal gear.

4. The measuring device (3, 50, 55) according to one of the preceding claims, **characterized by** at least one bearing (30), which is disposed between the output shaft (22) and the bearing sleeve (26) and by means of which the output shaft (22) is rotatably mounted in the bearing sleeve (26).

5. The measuring device (3, 50, 55) according to one of the preceding claims, **characterized by** at least one bearing (27) for the rotatable mounting of the bearing sleeve (26).

6. The measuring device (3, 50, 55) according to one of the preceding claims, **characterized in that** the rocker (40) is held in place by the force-measuring apparatus (7).

7. The measuring device (3, 50, 55) according to one of the preceding claims, **characterized by** at least one sealing element (31) which seals a gap (32) between the bearing sleeve (26) and the output shaft (22).

8. The measuring device (3, 50, 55) according to one of the preceding claims, **characterized by** an axle element (41), which is rigidly connected to the rocker (40) and by means of which the intermediate element (39) of the gearbox (36) is supported on the rocker (40), and by a bearing (42), which is disposed between the axle element (41) and the intermediate element (39) and by means of which the intermediate element (39) is mounted rotatable about the axle element (41).

9. The measuring device (3, 50, 55) according to one of the preceding claims, **characterized by** a housing (15) in which the rocker (40), the gearbox (36), and the bearing sleeve (26) are disposed.

10. The measuring device (3, 50, 55) according to claim 9, **characterized by** a floating ring (47) for sealing an opening (23) of the housing (15) through which the output shaft (22) is passed, wherein the output shaft (22) is passed through the floating ring (47).

11. The measuring device (3, 50, 55) according to claim 9 or 10, **characterized by** a sealing gas device (43) for introducing sealing gas (49) into the housing (15).

12. The measuring device (50) according to one of claims 9 to 11, **characterized by** at least one radial bearing (53), disposed between a wall (52) of the housing (15) and a cylindrical extension (51) of the rocker (40), for the rotatable mounting of the rocker (40) in the housing (15) and an axial bearing (54) on which the cylindrical extension (51) of the rocker (40) is supported.

13. The measuring device (55) according to one of claims 9 to 11, **characterized by** a cross spring element (57), which comprises a plurality of crossing springs (58), and a support element (56) for the punctual support of the rocker (40), wherein the rocker (40) is mounted in the housing (15) with the aid of the cross spring element (57) and the support element (56).

14. A method for operating a measuring device (3, 50, 55) according to one of the preceding claims, in which the measurement wheel (14) is driven by means of a drive unit (9), connected to the drive shaft (16), and the measurement wheel (14) is acted upon by a material flow (48), in particular a bulk material flow, wherein the material flow (48) is deflected by the measurement wheel (14), a reaction force, which is transmitted to the rocker (40) via the intermediate element (39) of the gearbox (36), acts on the measurement wheel (14) and a measurement signal, dependent on the reaction force, is generated by the force-measuring apparatus (7), by means of which a mass flow rate of the material flow (48) can be determined.

15. A measuring system (2) comprising a measuring device (3, 50, 55) according to one of claims 1 to 13 and an evaluation unit (10) which is designed to use a measurement signal from the force-measuring apparatus (7) of the measuring device (3, 50, 55) to determine a mass flow rate of a material flow (48) acting on the measurement wheel (14) of the measuring device (3, 50, 55).

16. A method for operating a measuring system (2) according to claim 14, for operating a measuring system comprising the measuring device (3, 50, 55) according to claim 15, wherein a mass flow rate of the material flow (48) is determined by the evaluation unit (10) of the measuring system (2) on the basis of the measurement signal.

17. The method according to claim 16, **characterized in that** a speed of the measurement wheel (14) is measured and the mass flow rate of the material flow (48) is determined by the evaluation unit (10) using the measured speed of the measurement wheel (14).

18. A metering system (1), comprising a measuring device (3, 50, 55) according to one of claims 1 to 13, a feed unit (6) for introducing the material flow (48) into the measuring device (3, 50, 55) and an evaluation unit (10), which is designed to set a defined mass flow rate of the material flow (48) using a measurement signal from the force-measuring apparatus (7) of the measuring device (3, 50, 55) by controlling or regulating a manipulated variable of the feed unit (6).

## Revendications

1. Appareil de mesure (3, 50, 55) pour la mesure d'un débit massique d'un flux de matériau (48), plus particulièrement d'un flux de produit en vrac, selon le principe de Coriolis, comprenant une roue de mesure à aubes (14), logée de manière rotative, pour la déviation du flux de matériau (48), un arbre d'entraînement (16) pour l'entraînement de la roue de mesure (14), un arbre de sortie (22) relié de manière rigide avec la roue de mesure (14), une douille de palier (26) entourant au moins une partie de l'arbre de sortie (22), pour le montage rotatif de l'arbre de sortie (22), un dispositif de mesure de force (7) et une transmission (36), qui comprend un premier élément de transmission (37), relié de manière rigide avec l'arbre d'entraînement (16), un deuxième élément de transmission (38), relié de manière rigide avec l'arbre de sortie (22) ainsi qu'un élément intermédiaire (39) pour la transmission d'un couple du premier élément de transmission (37) vers le deuxième élément de transmission (38),
**caractérisé par**
une biellette (40), reliée de manière rigide avec la douille de palier (26), sur laquelle est monté l'élément intermédiaire (39) de la transmission (36), dans lequel le dispositif de mesure de force (7) est relié avec la biellette (40) de façon à ce que, au moyen du dispositif de mesure de force (7), une force transmise à la biellette (40) puisse être mesurée.

2. Appareil de mesure (3, 50, 55) selon la revendication 1,
**caractérisé en ce que**
le premier élément de transmission (37), le deuxième élément de transmission (38) et l'élément intermédiaire (39) sont conçus respectivement comme des roues dentées, plus particulièrement des roues droites, dans lequel l'élément intermédiaire (39) est emboîté avec les premier et deuxième éléments de transmission (37, 38).

3. Appareil de mesure (3, 50, 55) selon la revendication 1 ou 2,
**caractérisé en ce que**
le premier élément de transmission (37) et l'élément intermédiaire (39) sont conçus respectivement comme des roues dentées à denture externe et le deuxième élément de transmission (38) est conçu comme une roue dentée à denture interne.

4. Appareil de mesure (3, 50, 55) selon l'une des revendications précédentes, **caractérisé par**
au moins un palier (30), disposé entre l'arbre de sortie (22) et la douille de palier (26), au moyen duquel l'arbre de sortie (22) est logé de manière rotative dans la douille de palier (26).

5. Appareil de mesure (3, 50, 55) selon l'une des revendications précédentes, **caractérisé par**
au moins un palier (27) pour le logement rotatif de la douille de palier (26).

6. Appareil de mesure (3, 50, 55) selon l'une des revendications précédentes, **caractérisé en ce que**
la biellette (40) est maintenue par le dispositif de mesure de force (7).

7. Appareil de mesure (3, 50, 55) selon l'une des revendications précédentes, **caractérisé par**
au moins un élément d'étanchéité (31) qui étanchéifie un interstice (32) entre la douille de palier (26) et l'arbre de sortie (22).

8. Appareil de mesure (3, 50, 55) selon l'une des revendications précédentes, **caractérisé par**
un élément d'axe (41), relié de manière rigide avec la biellette (40), au moyen duquel l'élément intermédiaire (39) de la transmission (36) s'appuie contre la biellette (40), et un palier (42), disposé entre l'élément d'axe (41) et l'élément intermédiaire (39), au moyen duquel l'élément intermédiaire (39) est logé de manière rotative autour de l'élément d'axe (41).

9. Appareil de mesure (3, 50, 55) selon l'une des revendications précédentes, **caractérisé par**
un boîtier (15), dans lequel la biellette (40), la transmission (36) et la douille de palier (26) sont disposés.

10. Appareil de mesure (3, 50, 55) selon la revendication 9,
**caractérisé par**
une bague suspendue (47), pour l'étanchéification d'une ouverture (23) du boîtier (15), à travers laquelle l'arbre de sortie (22) est guidé, dans lequel l'arbre de sortie (22) est guidé à travers la bague suspendue (47).

11. Appareil de mesure (3, 50, 55) selon la revendication 9 ou 10,
**caractérisé par**
un dispositif à gaz d'arrêt (43) pour l'introduction d'un gaz d'arrêt (49) dans le boîtier (15).

12. Appareil de mesure (3, 50, 55) selon l'une des revendications 9 à 11,
**caractérisé par**
au moins un palier radial (53), disposé entre une paroi (52) du boîtier (15) et un embout cylindrique (51) de la biellette (40), pour le logement rotatif de la biellette (40) dans le boîtier (15), et un palier axial (54), contre lequel s'appuie l'embout cylindrique (51) de la biellette (40).

13. Appareil de mesure (3, 50, 55) selon l'une des revendications 9 à 11,
**caractérisé par**
un élément à ressorts croisés (57), qui comprend plusieurs ressorts croisés (58), un élément d'appui (56) pour un appui ponctuel de la biellette (40), dans lequel la biellette (40) est logée dans le boîtier (15) à l'aide de l'élément à ressorts croisés (57) et de l'élément d'appui (56).

14. Procédé de fonctionnement d'un appareil de mesure (3, 50, 55) selon l'une des revendications précédentes, dans lequel la roue de mesure (14) est entraînée au moyen d'une unité d'entraînement (9) reliée avec l'arbre d'entraînement (16) et la roue de mesure (14) est sollicitée par un flux de matériau (48), plus particulièrement un flux de produit en vrac, dans lequel le flux de matériau (48) est dévié par la roue de mesure (14), une force de réaction agissant sur la roue de mesure (14), qui est transmise, par l'intermédiaire de l'élément intermédiaire (39) de la transmission (36), à la biellette (40) et un signal de mesure dépendant de la force de réaction est généré par le dispositif de mesure de force (7), à l'aide duquel un débit massique du flux de matériau (48) peut être déterminé.

15. Système de mesure (2) comprenant un appareil de mesure (3, 50, 55) selon l'une des revendications 1 à 13 ainsi qu'une unité d'analyse (10) qui est conçue pour déterminer, à l'aide d'un signal de mesure du dispositif de mesure de force (7) de l'appareil de mesure (3, 50, 55), un débit massique d'un flux de matériau (48) sollicitant la roue de mesure (14) de l'appareil de mesure (3, 50, 55).

16. Procédé selon la revendication 14 pour le fonctionnement d'un système de mesure (2) comprenant l'appareil de mesure (3, 50, 55), selon la revendication 15, dans lequel l'unité d'analyse (10) du système de mesure (2) détermine, à l'aide du signal de mesure, un débit massique du flux de matériau (48).

17. Procédé selon la revendication 16,
**caractérisé en ce que**
une vitesse de rotation de la roue de mesure (14) est mesurée et le débit massique du flux de matériau (48) est déterminé par l'unité d'analyse (10) à l'aide de la vitesse de rotation mesurée de la roue de mesure (14).

18. Système de dosage (1) comprenant un appareil de mesure (3, 50, 55) selon l'une des revendications 1 à 13, une unité d'alimentation (6) pour l'introduction du flux de matériau (48) dans l'appareil de mesure (3, 50, 55) ainsi qu'une unité d'analyse (10) qui est conçue pour régler, à l'aide d'un signal de mesure du dispositif de mesure de force (7) de l'appareil de mesure (3, 50, 55), par contrôle ou régulation d'une grandeur de réglage de l'unité d'alimentation (6), un débit massique défini du flux de matériau (48).
